# EUROPEAN PATENT APPLICATION

(11) **EP 3 006 532 A1**
(43) Date of publication of application: **13.04.2016**
(21) Application number: 15188619.9
(22) Date of filing: 06.10.2015
(51) Int. Cl.: C09J 7/02

(54) **PRESSURE SENSITIVE ADHESIVE TAPE**

(30) Priority: 06.10.2014 JP 2014205372; 30.01.2015 JP 2015017818
(71) Applicant: Lintec Corporation, Tokyo 173-0001 (JP)
(72) Inventor: MIYATAKE, Yusuke, Tokyo, Tokyo 173-0001 (JP); MIYAZAKI, Kentaro, Tokyo, Tokyo 173-0001 (JP); TAYA, Naoki, Tokyo, Tokyo 173-0001 (JP); KONDO, Takeshi, Tokyo, Tokyo 173-0001 (JP)
(74) Representative: Raynor, Stuart Andrew

(57) **Abstract**

[Problems] There is provided a pressure sensitive adhesive tape which can reduce the TVOC amount from the pressure sensitive adhesive tape.

[Solution] A pressure sensitive adhesive tape comprising a base material and a pressure sensitive adhesive layer provided on one surface of the base material, wherein an emission amount of total volatile organic compounds (TVOC) from the pressure sensitive adhesive tape is 1.0 µg or less as an n-decane equivalent amount per 1 cm² surface of the pressure sensitive adhesive layer.

## Description

### [Technical Field]

The present invention relates to a pressure sensitive adhesive tape and specifically to a pressure sensitive adhesive tape, such as a pressure sensitive adhesive tape for food labels, for which reducing an amount of volatile organic compounds is required. In the present description, the concept of a "tape" encompasses the concepts of a "sheet" and a "film."

### [Background Art]

In a pressure sensitive adhesive tape as used for food labels which are directly attached to foods, such as banana, orange, kiwi, avocado and other fruits, volatile organic compounds (referred also to as "VOC" in the present description) emitted from the pressure sensitive adhesive tape may have an influence on the visual appearance of foods, and the emission amount of such VOC is required to be reduced as much as possible. Moreover, in view of consideration for the environment, improvement of the working environment, etc., an amount of volatile organic compounds emitted from the pressure sensitive adhesive tape has been focused on as one aspect of value improvement of the pressure sensitive adhesive tape.

Patent Literature 1 relates to and discloses a pressure sensitive adhesive tape to be mainly used in vehicles, houses, or electric devices, and is aimed at reducing the emission amount of VOC (referred also to as a "VOC amount" in the present description). The pressure sensitive adhesive tape has a pressure sensitive adhesive layer comprising an acrylic-based pressure sensitive adhesive that contains an acrylic-based polymer and a tackifier. The acrylic-based polymer is polymerized using peroxyester as a polymerization initiator, of which the ten-hour half-life temperature is 80°C or less, the carbon number of an acid residue is 8 or more, and the carbon number of an alcohol residue is 6 or less, under polymerization conditions that the reaction temperature is maintained at a higher temperature than the ten-hour half-life temperature, and the ten-hour half-life temperature of the polymerization initiator and an ultimate polymerization temperature satisfy a specific condition. The tackifier contains components having a molecular weight of 600 or less, and the content ratio thereof is 13 wt% or less. The VOC amount of the acrylic-based pressure sensitive adhesive measured under a specific condition is within a predetermined range.

### [Prior Art Literature]

### [Patent Literature]

[Patent Literature 1] Japan Patent No. 5142446

### [Summary of the Invention]

### [Problems to be solved by the Invention]

According to Patent Literature 1, it is considered that a pressure sensitive adhesive tape capable of reducing the VOC amount can be obtained by using a specific polymerization initiator and containing an acrylic-based polymer produced under specific polymerization conditions and a specific amount of a tackifier of which the molecular weight ranges within a specific range.

However, such a limited manufacturing method as the above has a low degree of freedom in designing a pressure sensitive adhesive tape. Accordingly, there is a demand for a pressure sensitive adhesive tape which has a high degree of freedom in design and of which the emission amount of total volatile organic compounds (referred also to as "TVOC" in the present description) from the pressure sensitive adhesive tape is small (the emission amount of TVOC will be referred also to as a "TVOC amount" in the present description).

The present invention has been created in view of such actual circumstances as described above, and objects of the present invention include providing a pressure sensitive adhesive tape which can reduce the TVOC amount from the pressure sensitive adhesive tape.

### [Means for solving the Problems]

The present invention provided to achieve the above objects is as follows:
(1) A pressure sensitive adhesive tape comprising a base material and a pressure sensitive adhesive layer provided on one surface of the base material, wherein an emission amount of total volatile organic compounds (TVOC) from the pressure sensitive adhesive tape is 1.0 µg or less as an n-decane equivalent amount per 1 cm² surface of the pressure sensitive adhesive layer.
(2) The pressure sensitive adhesive tape as described in the above (1), wherein a peel strength in 180° peeling from a SUS plate (SUS304 #600) is 0.1 N/25 mm or more when measured in accordance with JIS Z0237: 2009.
(3) The pressure sensitive adhesive tape as described in the above (1) or (2), wherein the pressure sensitive adhesive layer of the pressure sensitive adhesive tape comprises a pressure sensitive adhesive that contains a triblock copolymer as a main component.
(4) The pressure sensitive adhesive tape as described in the above (3), wherein the triblock copolymer satisfies at least one of a condition that a polystyrene equivalent weight-average molecular weight (Mw) is 30, 000 or more and 300, 000 or less and a condition that a molecular weight distribution (Mw/Mn) is 5.0 or less.
(5) The pressure sensitive adhesive tape as described in any one of the above (1) to (4), satisfying at least one of a condition that an amount of nonvolatile components dissolved from 1 dm² surface of the pressure sensitive adhesive layer of the pressure sensitive adhesive tape into an extraction solvent of water is 60 mg or less and a condition that an amount of nonvolatile components dissolved from 1 dm² surface of the pressure sensitive adhesive layer of the pressure sensitive adhesive tape into an extraction solvent of 95 vol% ethanol is 60 mg or less.

### [Advantageous Effect of the Invention]

According to the present invention, there is provided a pressure sensitive adhesive tape which can reduce the TVOC amount from the pressure sensitive adhesive tape.

### [Embodiments for Carrying out the Invention]

Hereinafter, embodiments of the present invention will be described.

The pressure sensitive adhesive tape according to an embodiment of the present invention comprises a base material and a pressure sensitive adhesive layer provided on one surface of the base material. The pressure sensitive adhesive tape may further comprise a release sheet provided on a surface of the pressure sensitive adhesive layer opposite to the surface facing the base material.

The pressure sensitive adhesive tape according to an embodiment of the present invention has a feature that the emission amount (TVOC amount) of total volatile organic compounds (TVOC) from the pressure sensitive adhesive tape is 1.0 µg or less as an n-decane equivalent amount per 1 cm² surface of the pressure sensitive adhesive layer. According to the feature that the above TVOC amount is 1.0 µg or less, problems are unlikely to occur, such as poor visual appearance of an adherend, e.g., color change of banana, due to the VOC emitted from the pressure sensitive adhesive tape. In view of more stably reducing the possibility of occurrence of the above problems, the above TVOC amount may preferably be 0.7 µg or less, more preferably 0.5 µg or less, furthermore preferably 0.3 µg or less, and particularly preferably 0.2 µg or less.

The pressure sensitive adhesive tape according to an embodiment of the present invention may preferably satisfy at least one of a condition that an amount of nonvolatile components dissolved from 1 dm² surface of the pressure sensitive adhesive layer into an extraction solvent of water is 60 mg or less and a condition that an amount of nonvolatile components dissolved from 1 dm² surface of the pressure sensitive adhesive layer into an extraction solvent of 95 vol% ethanol (the balance substantially comprises water) is 60 mg or less. According to the feature that the above amount of nonvolatile components is 60 mg or less, troubles are unlikely to occur due to substances migrated from the pressure sensitive adhesive layer of the pressure sensitive adhesive tape to an adherend via water and organic components such as alcohol (specific examples of such troubles include a trouble that the adherend is polluted by the substances, a trouble that the pressure sensitive adhesive tape becomes difficult to be peeled off from the adherend, and a trouble that components that constitute the pressure sensitive adhesive layer remain to adhere to the adherend from which the pressure sensitive adhesive tape has been peeled off). When the adherend is a food, such as banana, orange, kiwi, avocado and other fruits, the fruit skin to directly be an adherend substance contains organic components in addition to water. Therefore, components contained in the pressure sensitive adhesive layer may dissolve into such organic components so as to migrate to the fruit skin side.

In view of more stably reducing the possibility of occurrence of the above problems, the amount of nonvolatile components dissolved from 1 dm² surface of the pressure sensitive adhesive layer into the above extraction solvent of water may preferably be 10 mg or less, more preferably 5 mg or less, particularly preferably 1 mg or less, and highly preferably 0.5 mg or less. In view of more stably reducing the possibility of occurrence of the above problems, the amount of nonvolatile components dissolved from 1 dm² surface of the pressure sensitive adhesive layer into the above extraction solvent of 95 vol% ethanol may preferably be 11 mg or less, more preferably 8 mg or less, and particularly preferably 3 mg or less.

In the present description, the amount of nonvolatile components dissolved into an extraction solvent, such as water, refers to an amount measured by a test method performed in accordance with "the basic rules necessary for testing migration of the constituents of plastic materials and articles intended to come into contact with foodstuffs" (Directive 82/711/EEC, 97/48/EC). Specifically, a test sample is obtained by removing the release sheet from the pressure sensitive adhesive tape and attaching the pressure sensitive adhesive tape to a frame-shaped jig for exposing a predetermined size (surface area of 3 dm²) of the pressure sensitive adhesive surface. Subsequently, the test sample is stationarily placed at 20°C for 24 hours so that the pressure sensitive adhesive surface of the pressure sensitive adhesive tape is in contact with 150 ml of the extraction solvent (specifically, water or 95 vol% ethanol). Thereafter, only the extraction solvent is dried at 20°C, and drying operation is further performed at 120 °C for 30 minutes. The weight of residue after drying (total amount of migrated components) is measured, which represents the amount of nonvolatile components dissolved into the above extraction solvent.

In the pressure sensitive adhesive tape according to an embodiment of the present invention, it is preferred that the peel strength in 180° peeling from a SUS plate (SUS304 #600) is 0.1 N/25 mm or more when measured in accordance with JIS Z0237 : 2009 (ISO 29862-29864: 2007). In general, the volatile components from the pressure sensitive adhesive tape and the nonvolatile components from the surface of the pressure sensitive adhesive layer as the above have a relatively low molecular weight. For this reason, when such low molecular weight components are contained in the pressure sensitive adhesive layer, they can function as components that enhance the pressure sensitive adhesion of the pressure sensitive adhesive tape to an adherend. Examples of such components include a tackifier. Therefore, when the TVOC amount from the pressure sensitive adhesive tape and the amount of nonvolatile components from the surface of the pressure sensitive adhesive layer are small, in particular when the amount of nonvolatile components from the surface of the pressure sensitive adhesive layer is small, the possibility that the pressure sensitive adhesion of the pressure sensitive adhesive tape to an adherend deteriorates may be high. Moreover, reducing the thickness of the pressure sensitive adhesive layer, which is an example of means for reducing the volatile components from the pressure sensitive adhesive tape, may deteriorate the pressure sensitive adhesion of the pressure sensitive adhesive tape to an adherend, as a basic tendency.

When the above peel strength in 180° peeling is 0.1 N/25 mm or more, however, the pressure sensitive adhesion of the pressure sensitive adhesive tape according to an embodiment of the present invention to an adherend is unlikely to deteriorate, which may be preferred. In view of more stably reducing the possibility that the pressure sensitive adhesion of the pressure sensitive adhesive tape to an adherend deteriorates, the above peel strength in 180° peeling may preferably be 0.5 N/25 mm or more, more preferably 1.0 N/25 mm or more, and further preferably 3.0 N/25 mm or more.

The upper limit of the above peel strength is not provided, but should be set in accordance with the intended use. Examples of the upper limit include, but are not limited to, being 50 N/25 mm or less (when having no removability) and being 30 N/25 mm or less (when having removability).

Material of the base material of the pressure sensitive adhesive tape according to an embodiment of the present invention is not limited. The base material may be composed of a resin-based sheet that contains a resin-based material as the main component, or may also be composed of a paper-based material.

Examples of resin components of the resin-based sheet include: olefin-based polymer such as polyethylene, polypropylene and ethylene-(meth)acrylic acid copolymer; ester-based polymer such as polyethylene terephthalate and polybutylene terephthalate; and amide-based polymer such as nylon 6, 6 and nylon 6. As used in the present description, the term "(meth)acrylic acid" means both of acrylic acid and methacrylic acid. The same applies to other similar terms. Examples of resin of the above resin-based sheet include, in addition to the resins that contain the above components, acetate resin, acrylonitrile-butadiene-styrene copolymer (ABS) resin, polystyrene resin, vinyl chloride resin, polyester amide resin, polyether resin, polyimide resin, polyamide imide resin, poly-p-phenylene sulfide resin, and polyether ester resin. The base material may contain one kind of these materials, or may also contain two or more kinds.

Among the above-described resin components of the resin-based sheet, olef in-based polymer may preferably be used. As used in the present description, the term "olefin-based polymer" means a homopolymer or a copolymer obtained by polymerizing one or more kinds selected from olefin monomers. Examples of the olefin monomers include olefin monomers having a carbon number of 2 to 8, α-olefin monomers having a carbon number of 3 to 18, and olefin monomers having a cyclic structure. Examples of the olefin monomers having a carbon number of 2 to 8 include ethylene, propylene, 2-butene, and octene. Examples of the α-olefin monomers include propylene, 1-butene, 4-methyl-1-pentene, 1-hexene, 1-octene, 1-decene, 1-dodecene, 1-tetradecene, and 1-octadecene. Examples of the olefin monomers having a cyclic structure include norbornene, cyclopentadiene, cyclohexadiene, dicyclopentadiene, and tetracyclododecene, and derivatives thereof.

When the olefin-based polymer contains polyethylene, the polyethylene may be any of high-density polyethylene, medium-density polyethylene, low-density polyethylene, ultralow-density polyethylene, and linear low-density polyethylene, and may also be a mixture of two or more kinds thereof.

Specific examples of the olefin-based polymer of copolymer include: polyethylene-based resin, such as ethylene-propylene copolymer, ethylene-vinyl acetate copolymer, ethylene-vinyl acetate-maleic anhydride copolymer, ethylene-(meth)acrylic acid copolymer, ethylene-butyl acrylate copolymer, and ethylene-(meth)acrylic ester-maleic anhydride copolymer; polypropylene-based resin, such as propylene-ethylene-diene compound copolymer; acid-modified polyolefin; and ionomer-based resin.

When the olefin-based polymer contains ethylene-propylene copolymer, the ethylene-propylene copolymer may be any of block polymer and random polymer, and may also be a mixture thereof.

One kind of the olefin-based polymer may be solely used, or two or more kinds may also be used in a mixture.

The base material may be composed of a single layer of the above resin-based sheet, or may also be composed of a multilayer obtained by laminating a plurality of the above resin-based sheets. When the base material comprises a resin-based sheet or resin-based sheets, the resin-based sheet or sheets may not be oriented, or may also be monoaxially or biaxially oriented such as in the longitudinal and/or lateral directions.

When the base material is composed of a resin-based material, the base material may be produced by coextrusion molding with the pressure sensitive adhesive layer.

Specific examples of the base material composed of paper-based material include paper base material, such as glassine paper, coated paper and wood-free paper, and laminated paper obtained by laminating the above paper base material with a thermoplastic resin, such as polyethylene.

The material that constitutes the base material may contain a coloring material (examples thereof include pigment, such as carbon black and titanium dioxide, and colorant) thereby to color the base material. In view of enhancing the mechanical properties and imparting the blocking resistance, the material that constitutes the base material may contain fine particles, such as silica. The base material may further contain components, such as filler, antioxidant and ultraviolet absorber, depending on the intended use.

The base material may be formed with a primer coat layer, printed layer, coating layer, metal deposition layer, ultraviolet prevention layer, etc.

The above primer coat layer may preferably be a layer that contains a styrene-based thermoplastic elastomer. The styrene-based thermoplastic elastomer may preferably be a non-perfectly hydrogenated styrene-based thermoplastic elastomer in which ethylenic double bonds are partially hydrogenated or hydrogenation is not performed. According to the feature that a layer that contains a styrene-based thermoplastic elastomer is formed as a primer coat on the base material, it is possible to effectively suppress the occurrence of delamination in the pressure sensitive adhesive tape according to the present embodiment. It is preferred herein to use, as the base material, the above-described resin-based sheet using an olefin-based polymer because in this case there is significantly exerted an effect of suppressing the occurrence of delamination owing to the layer, as the primer coat layer, which contains the styrene-based thermoplastic elastomer.

As used in the present description, the term "styrene-based thermoplastic elastomer" means a material comprising a copolymer that contains a constitutional unit derived from styrene or its derivatives (styrene-based compound) and having rubber-like elasticity in a temperature range including an ordinary temperature while having thermoplasticity. The term "non-perfectly hydrogenated styrene-based thermoplastic elastomer" as used herein means a styrene-based thermoplastic elastomer in which hydrogenation is not perfectly performed, and specific examples thereof include a non-hydrogenated styrene-based thermoplastic elastomer and a partially hydrogenated styrene-based thermoplastic elastomer.

Examples of the above styrene-based thermoplastic elastomer include styrene-conjugate diene copolymer. Specific examples of the styrene-conjugate diene copolymer include: non-hydrogenated styrene-conjugate diene copolymers, such as styrene-butadiene copolymer (SBR), styrene-butadiene-styrene copolymer (SBS), styrene-butadiene-butylene-styrene copolymer, styrene-isoprene copolymer, styrene-isoprene-styrene copolymer (SIS), and styrene-ethylene-isoprene-styrene copolymer, etc. Examples of the commercially available products in the industrial field include Tufprene (registered trademark) available from Asahi Kasei Corp., Kraton (registered trademark) available from Kraton Polymer Japan, Sumitomo TPE-SB available from Sumitomo Chemical Company, Limited, Epofriend (registered trademark) available from Daicel Corporation, Rabalon (registered trademark) available from Mitsubishi Chemical Corporation, Septon (registered trademark) available from KURARAY CO., LTD., and Tuftec (registered trademark) available from Asahi Kasei Corp.

Specific examples of the partially hydrogenated styrene-based thermoplastic elastomer include a partially hydrogenated product of styrene-butadiene copolymer (SBS) and a partially hydrogenated product of styrene-isoprene copolymer (SIS). The non-perfectly hydrogenated styrene-based thermoplastic elastomer contained in the primer coat layer may preferably comprise a partially hydrogenated product of SIS among the above products, and may more preferably consist of a partially hydrogenated product of SIS.

When the primer coat layer contains a non-perfectly hydrogenated styrene-based thermoplastic elastomer, the styrene-containing ratio in the non-perfectly hydrogenated styrene-based thermoplastic elastomer may preferably be 20 mass% or more and 80 mass% or less. According to the feature that the styrene-containing ratio is within the above range, it is possible to enhance the peel resistance of the primer coat layer to the base material and to the pressure sensitive adhesive layer, i.e., to reduce the possibility of occurrence of delamination in the pressure sensitive adhesive tape.

In view of more stably enhancing the peel resistance of the primer coat layer to the base material, the above styrene-containing ratio may preferably be 25 mass% or more, and more preferably 30 mass% or more.

In view of more stably enhancing the peel resistance of the primer coat layer to the pressure sensitive adhesive layer, the above styrene-containing ratio may preferably be 75 mass% or less, and more preferably 70 mass% or less.

The thickness of the primer coat layer is not particularly limited, but may ordinarily be 1 µm or more and 100 µm or less. If this thickness is unduly small, the productivity of the primer coat layer may possibly deteriorate, while unduly large thickness may possibly cause subsidiary problems, such as that the productivity deteriorates. The thickness of the primer coat layer may preferably be 2 µm or more and 50 µm or less, more preferably 4 µm or more and 40 µm or less, and furthermore preferably 6 µm or more and 20 µm or less.

The thickness of the base material should be appropriately set in accordance with the intended use, and is not limited. The thickness of the base material may ordinarily be 10 µm to 1,000 µm, preferably 20 µm to 500 µm, and particularly preferably about 25 µm to 200 µm. In the present description, the thickness of the base material means a thickness of those including layers, such as a primer coat layer, printed layer, coating layer, metal deposition layer, and ultraviolet prevention layer, which are formed on the base material.

The composition of the pressure sensitive adhesive layer of the pressure sensitive adhesive tape according to an embodiment of the present invention is not limited, provided that the TVOC amount from the pressure sensitive adhesive tape satisfies the above condition.

The type of the pressure sensitive adhesive of the pressure sensitive adhesive layer is not limited. Specific examples of the pressure sensitive adhesive include rubber-based resin, acrylic-based resin, silicone-based resin, and polyvinyl ether-based resin. Among them, the acrylic-based resin is preferred because of easy handling and stable availability. Specific examples of the acrylic-based resin include (meth)acrylic acid-based triblock copolymer, such as polymethyl methacrylate (PMMA)-polybutyl acrylate (PBA)-polymethyl methacrylate (PMMA) and polymethyl methacrylate (PMMA)-poly2-ethylhexyl acrylate (2EHA)-polymethyl methacrylate (PMMA). The pressure sensitive adhesive may be composed of one kind of material, or may also be composed of two or more kinds of materials.

It is preferred that the pressure sensitive adhesive of the pressure sensitive adhesive layer contains a triblock copolymer as the main component. Explaining an acrylic acid-based triblock-based polymer as a specific example, the triblock copolymer has a structure in which relatively hard segments (hard segments) of PMMA capable of pseudo-crosslinking are linked with both ends of a relatively soft segment (soft segment) of PBA or 2EHA. Polymer having such a structure may be produced by living anionic polymerization, and therefore has a molecular weight distribution with a relatively sharp peak. Thus, in the triblock copolymer, the content of low molecular weight components such as having volatility is small.

Therefore, owing to the feature of the pressure sensitive adhesive tape according to an embodiment of the present invention that the pressure sensitive adhesive of the pressure sensitive adhesive layer contains a triblock copolymer as the main component, the TVOC amount from the pressure sensitive adhesive tape according to an embodiment of the present invention readily satisfies the above condition. Moreover, the amount of low molecular weight components, which are likely to readily move in a composition that contains a triblock copolymer, is small. Therefore, owing to the feature of the pressure sensitive adhesive tape according to an embodiment of the present invention that the pressure sensitive adhesive of the pressure sensitive adhesive layer contains a triblock copolymer as the main component, the pressure sensitive adhesive layer of the pressure sensitive adhesive tape according to an embodiment of the present invention readily satisfies the above condition with regard to the amount of nonvolatile components dissolved into the extraction solvent.

When the temperature of the triblock copolymer is high, each polymer may tend to solely exist, but the triblock copolymer can be designed such that, when the temperature is around the room temperature, the segments located at both ends and capable of pseudo-crosslinking interact with segments of other polymer capable of pseudo-crosslinking, thereby to have a three-dimensional collective structure as a whole. Therefore, owing to the feature of the pressure sensitive adhesive tape according to an embodiment of the present invention that the pressure sensitive adhesive of the pressure sensitive adhesive layer contains a triblock copolymer as the main component, a pressure sensitive adhesive layer can be obtained which has excellent physical properties (such as storage elastic modulus and tensile strength) after molding due to the three-dimensional collective structure while maintaining good flowability during injection molding or extrusion molding. Explaining from another aspect the change in physical properties due to temperature, at the stage where the triblock copolymer is put into the hopper of a molding machine, autohesion of pellets may not readily occur, whereas at the stage where the triblock copolymer is molten, the flowability can be enhanced, so that troubles are unlikely to occur when the pressure sensitive adhesive layer is formed by molding.

That is, when the pressure sensitive adhesive of the pressure sensitive adhesive layer of the pressure sensitive adhesive tape according to an embodiment of the present invention contains a triblock copolymer as the main component, forming the pressure sensitive adhesive layer by molding may be preferred, and if the pressure sensitive adhesive layer is formed by such a manufacturing method, the pressure sensitive adhesive tape according to an embodiment of the present invention can be provided with the pressure sensitive adhesive layer which is formed substantially without using a volatile solvent. In this case, the TVOC amount from the pressure sensitive adhesive tape according to an embodiment of the present invention may readily satisfy the above condition more stably.

Moreover, it is also possible to control the cohesive strength of the triblock copolymer as a whole, such as by adjusting the length of the soft segments and adjusting the quantitative balance between the soft segments and the hard segments. Therefore, owing to the feature of the pressure sensitive adhesive tape according to an embodiment of the present invention that the pressure sensitive adhesive of the pressure sensitive adhesive layer contains a triblock copolymer as the main component, a pressure sensitive adhesive layer can be obtained which has excellent pressure sensitive adhesion to an adherend (including removability from an adherend).

The polystyrene equivalent weight-average molecular weight (Mw) of the pressure sensitive adhesive is not limited in the pressure sensitive adhesive layer of the pressure sensitive adhesive tape according to an embodiment of the present invention. When the above pressure sensitive adhesive contains a triblock copolymer, it is preferred that the triblock copolymer satisfies at least one of a condition that the polystyrene equivalent weight-average molecular weight (Mw) is 30,000 or more and 300,000 or less and a condition that the molecular weight distribution (Mw/Mn) is 5.0 or less.

In the present description, the value of the polystyrene equivalent weight-average molecular weight (Mw) refers to a value measured as a standard polystyrene equivalent value by the gel permeation chromatography (GPC) using a solvent of tetrahydrofuran (THF). Specifically, the measurement is to be performed using a GPC measurement apparatus ("HLC-8220GPC" available from TOSOH CORPORATION) under the following conditions:
Columns: TSKgelGMHXL → TSKgelGMHXL → TSKgel2000HXL
Injection amount: 80 µl
Measurement temperature: 40°C
Flow rate: 1 ml/min
Detector: differential refractometer
Sample concentration: 1% (w/v)

According to the feature that the polystyrene equivalent weight-average molecular weight (Mw) of the above triblock copolymer is 30, 000 or more and 300, 000 or less, the TVOC amount from the pressure sensitive adhesive tape according to an embodiment of the present invention may readily satisfy the above condition, and the pressure sensitive adhesive layer of the pressure sensitive adhesive tape according to an embodiment of the present invention may readily satisfy the above condition with regard to the amount of nonvolatile components dissolved into the extraction solvent. In view of readily satisfying the conditions with regard to the TVOC amount and the amount of nonvolatile components dissolved into the extraction solvent, in view of more stably reducing the possibility that the pressure sensitive adhesion of the pressure sensitive adhesive tape to an adherend is deteriorated, in view of suppressing the migration of components to an adherend, and in view of making it easy to form the pressure sensitive adhesive layer by extrusion molding to be described later, the polystyrene equivalent weight-average molecular weight (Mw) of the above triblock copolymer may preferably be within a range from 30, 000 to 300,000, more preferably within a range from 40,000 to 250,000, and highly preferably within a range from 50,000 to 200,000.

According to the feature that the molecular weight distribution (Mw/Mn) of the above triblock copolymer is 5.0 or less, it can be more stably realized to reduce the amount of low molecular weight components contained in the triblock copolymer. In view of further stably reducing the above amount of low molecular weight components, the molecular weight distribution (Mw/Mn) of the above triblock copolymer may preferably be 1.0 or more and 5.0 or less, more preferably 1.0 or more and 3.0 or less, and particularly preferably 1.0 or more and 2.0 or less. When the condition with regard to the range of the above polystyrene equivalent weight-average molecular weight (Mw) is also satisfied, the amount of low molecular weight components contained in the triblock copolymer can be particularly stably reduced. Therefore, by satisfying the condition with regard to the above molecular weight distribution (Mw/Mn), and preferably by also satisfying the condition with regard to the range of the above polystyrene equivalent weight-average molecular weight (Mw), the TVOC amount from the pressure sensitive adhesive tape according to an embodiment of the present invention may readily satisfy the above condition, and the pressure sensitive adhesive layer of the pressure sensitive adhesive tape according to an embodiment of the present invention may readily satisfy the above condition with regard to the amount of nonvolatile components dissolved into the extraction solvent.

The pressure sensitive adhesive layer may be formed of a liquid-like pressure sensitive adhesive composition. In this case, the liquid-like pressure sensitive adhesive composition may contain a cross-linking agent, such as an isocyanate-based compound and epoxy compound, in addition to the polymer that constitutes the pressure sensitive adhesive. When the liquid-like pressure sensitive adhesive composition contains a crosslinking agent, the pressure sensitive adhesive layer may contain a crosslinked product of the polymer and the crosslinking agent.

The pressure sensitive adhesive layer may contain a coloring material (examples thereof include pigment, such as carbon black and titanium dioxide, and colorant) thereby to color the pressure sensitive adhesive layer. The pressure sensitive adhesive layer may further contain components, such as filler, antioxidant and ultraviolet absorber, depending on the intended use.

The thickness of the pressure sensitive adhesive layer should be appropriately set in accordance with the intended use, and is not limited. As a basic tendency, an increased thickness of the pressure sensitive adhesive layer may enhance the pressure sensitive adhesion of the pressure sensitive adhesive tape to an adherend, but the TVOC amount from the pressure sensitive adhesive tape is likely to increase, and the amount of nonvolatile components dissolved from the surface of the pressure sensitive adhesive layer to the above extraction solvent is also likely to increase. The thickness of the pressure sensitive adhesive layer may ordinarily be 1 µm to 1,000 µm, preferably 2 µm to 500 µm, more preferably 5 µm to 100 µm, and particularly preferably about 10 µm to 50 µm.

The pressure sensitive adhesive tape according to an embodiment of the present invention may be in an elongated form and wound up into a roll. In this case, the surface of the pressure sensitive adhesive layer of the pressure sensitive adhesive tape may be protected by the surface of the base material of the pressure sensitive adhesive tape opposite to the surface facing the pressure sensitive adhesive layer, until use.

In order to protect the surface of the pressure sensitive adhesive layer of the pressure sensitive adhesive tape according to an embodiment of the present invention, a release sheet may be attached to the surface of the pressure sensitive adhesive tape at the side of the pressure sensitive adhesive layer.

To an extent that does not impair the advantageous effects of the present invention, additives, such as non-crosslinkable resin, crosslinkable resin, tackifier, coupling agent, filler, softener, plasticizer, surfactant, antioxidant, heat stabilizer, light stabilizer, ultraviolet absorber, colorant, antifoam, flame retardant, and antistatic, may be added to the material that forms the above pressure sensitive adhesive layer.

The non-crosslinkable resin is effective for adjustment of viscosity and prevention of autohesion. It is preferred that the non-crosslinkable resin can be powder within a temperature region in the hopper of an extruder. It is also preferred that the non-crosslinkable resin has compatibility to the pressure sensitive adhesive layer. In view of more stably realizing the added resin having compatibility to the pressure sensitive adhesive layer, it is more preferred that the added resin is a resin of the same series as the pressure sensitive adhesive layer. That is, when the pressure sensitive adhesive layer comprises an acrylic acid-based resin, it is preferred that the added resin is also an acrylic acid-based resin. The content of the added resin in the pressure sensitive adhesive layer is not limited, provided that it functions to adjust the viscosity of the pressure sensitive adhesive layer. The content of the added resin in the pressure sensitive adhesive layer may preferably be more than 0.01 mass% and less than 10 mass%, more preferably 0.1 mass% or more and 5 mass% or less, and particularly preferably 0.5 mass% or more and 3 mass% or less.

Examples of the release sheet to be used include: films, such as polyethylene film, polypropylene film, polybutene film, polybutadiene film, polymethylpentene film, polyvinyl chloride film, vinyl chloride copolymer film, polyethylene terephthalate film, polyethylene naphthalate film, polybutylene terephthalate film, polyurethane film, ethylene vinyl acetate film, ionomer resin film, ethylene- (meth) acrylic acid copolymer film, ethylene-(meth)acrylic ester copolymer film, polystyrene film, polycarbonate film, polyimide film, and fluorine resin film; and papers, such as glassine paper and wood-free paper. A laminate film obtained by laminating a plurality of such films may also be used.

It is preferred that the release surface (surface to be in contact with the pressure sensitive adhesive layer) of the above release sheet is subjected to release treatment. Examples of a release agent to be used for the release treatment include alkyd-based, silicone-based, fluorine-based, unsaturated polyester-based, polyolefin-based, and wax-based release agents. The thickness of the release sheet is not particularly limited, and may ordinarily be about 20 µm to 150 µm.

The release sheet may be produced by molding work, such as extrusion molding. In this case, the release sheet may be formed by coextrusion molding together with the pressure sensitive adhesive layer.

The method of manufacturing the pressure sensitive adhesive tape according to an embodiment of the present invention is not limited. Examples of the method include, but are not limited to, methods as follows:

(Method 1) A pressure sensitive adhesive layer is formed on a base material by extrusion molding using a pressure sensitive adhesive composition for forming the pressure sensitive adhesive layer. If necessary, a release sheet may be attached to the surface of the obtained pressure sensitive adhesive layer, or alternatively a substance obtained by extrusion molding may be laminated between a base material and a release sheet.

(Method 2) A laminate of a pressure sensitive adhesive layer and a base material is formed on a release sheet by coextrusion molding using a pressure sensitive adhesive composition for forming the pressure sensitive adhesive layer and a resin composition for forming the base material.

(Method 3) A laminate of a pressure sensitive adhesive layer and a release sheet is formed on a base material by coextrusion molding using a pressure sensitive adhesive composition for forming the pressure sensitive adhesive layer and a resin composition for forming the release sheet.

(Method 4) A laminate of a base material, a pressure sensitive adhesive layer, and a release sheet is formed by coextrusion molding using a pressure sensitive adhesive composition for forming the pressure sensitive adhesive layer, a resin composition for forming the base material, and a resin composition for forming the release sheet.

(Method 5) A liquid-like pressure sensitive adhesive composition for forming a pressure sensitive adhesive layer is applied to a base material, and drying or the like is performed to form the pressure sensitive adhesive layer on the base material. If necessary, a release sheet may be attached to the surface of the obtained pressure sensitive adhesive layer.

(Method 6) A liquid-like pressure sensitive adhesive composition for forming a pressure sensitive adhesive layer is applied to a release sheet, and drying or the like is performed to form the pressure sensitive adhesive layer on the release sheet. A base material is attached to the surface of the obtained pressure sensitive adhesive layer.

In view of suppressing the TVOC, it is preferred that a solvent is not used in a film forming process. Therefore, any of the methods of manufacturing a pressure sensitive adhesive tape according to Methods 1 to 4 may be preferred.

When the above Methods 1 to 4 are employed, it is preferred that the pressure sensitive adhesive composition for forming the pressure sensitive adhesive layer contains a triblock copolymer. It is also preferred that the triblock copolymer satisfies at least one of a condition that the polystyrene equivalent weight-average molecular weight (Mw) is 30,000 or more and 300,000 or less and a condition that the molecular weight distribution (Mw/Mn) is 5.0 or less.

When the above Methods 5 and 6 are employed, the pressure sensitive adhesive layer may be left under a reduced pressure condition for a predetermined period of time in order to remove a diluent solvent remaining in the pressure sensitive adhesive layer which is formed of a layer of the applied liquid-like pressure sensitive adhesive. Although the steps for this procedure may increase, the TVOC amount from the pressure sensitive adhesive tape can be reduced.

Any specific method of the above Methods 1 to 6 and conditions thereof (method of applying and conditions thereof, method of drying or the like and conditions thereof, method of extrusion molding and conditions thereof, and method of coextrusion molding and conditions thereof) may be appropriately set in accordance with the structure and use of the pressure sensitive adhesive tape to be manufactured (which may further comprise a release sheet), materials to be used for manufacturing the pressure sensitive adhesive tape (which may further comprise a release sheet), etc.

The embodiments heretofore explained are described to facilitate understanding of the present invention and are not described to limit the present invention. Therefore, it is intended that the elements disclosed in the above embodiments include all design changes and equivalents to fall within the technical scope of the present invention.

### [Examples]

Hereinafter, the present invention will be further specifically described with reference to examples, etc., but the scope of the present invention is not limited to these examples, etc. In the examples, Mw represents a polystyrene equivalent weight-average molecular weight, and Mn represents a polystyrene equivalent number-average molecular weight.

### [Example 1]

A pressure sensitive adhesive composition A was obtained as a material for forming a pressure sensitive adhesive layer by adding 0.5 weight parts of polymethyl methacrylate (PMMA) fine particles ("Techpolymer MB-4" available from Sekisui Plastics Co., Ltd., Mw=775,000) to 100 weight parts of pellet-like acrylic acid-based triblock pressure sensitive adhesive ("KURARITY LA3320" available from KURARAY CO., LTD., PMMA-polybutyl acrylate (PBA)-PMMA, PMMA ratio=18.7 mol%, Mw=119,000, Mw/Mn=1.1) and mixing them in a tumbler for 10 minutes.

The pressure sensitive adhesive composition A was put into an extruder, and film formation was performed using a T-die to form a pressure sensitive adhesive layer so that the thickness of the pressure sensitive adhesive layer would be 20 µm. The obtained pressure sensitive adhesive layer was laminated with a polyethylene terephthalate (PET) film ("LUMIRROR 50T60" available from Toray Industries, Inc., thickness of 50 µm) located to face one surface of the pressure sensitive adhesive layer and a release sheet ("SP-PET381031" available from LINTEC Corporation) located at the surface of the pressure sensitive adhesive layer opposite to the surface facing the PET film, and a pressure sensitive adhesive tape was thus obtained with the release sheet attached thereto.

### [Example 2]

A pressure sensitive adhesive composition B was obtained in the same manner as in Example 1 except that pellet-like acrylic acid-based triblock copolymer ("NABSTAR N800AS" available from KANEKA CORPORATION, PMMA-PBA-PMMA triblock copolymer, PMMA ratio=27.0 mol%, Mw=127,000, Mw/Mn=1.3), different from the material used in Example 1, was used as the pellet-like acrylic acid-based triblock pressure sensitive adhesive. The same operation as in Example 1 was performed using the pressure sensitive adhesive composition B, and a pressure sensitive adhesive tape was thus obtained with a release sheet attached thereto.

### [Example 3]

A reaction apparatus comprising a thermometer, a stirrer, a reflux condenser, and a nitrogen gas inlet was used and fed with 75 mass parts of toluene, 75 mass parts of ethyl acetate, 90 mass parts of butyl acrylate (BA), and 10 mass parts of acrylic acid (AA). After adding thereto 0.3 mass parts of azobisisobutyronitrile, polymerization reaction was performed in a nitrogen gas atmosphere at 80°C for 8 hours, and BA-AA copolymer solution was obtained. Mw of the BA-AA copolymer was 500,000, and the mass ratio of a constitutional unit based on BA and a constitutional unit based on AA (BA:AA) was 90:10. Toluene was added to the obtained BA-AA copolymer solution to adjust the solid content to 34 mass%, and an acrylic-based copolymer solution C was thus obtained.

A liquid-like pressure sensitive adhesive composition D was produced by compounding 1.0 mass part of toluene diisocyanate (TDI, product name "BHS-8515" available from TOYO INK CO., LTD., solid content of 37.5 mass%) as an isocyanate-based crosslinking agent and 50 mass parts of toluene as a diluent solvent to 100 mass parts of the obtained acrylic copolymer solution C.

The above liquid-like pressure sensitive adhesive composition D was applied to the silicone resin release treatment surface of a release material ("SP-PET381031" available from LINTEC Corporation) using a knife-over-roll coater, and dried (90°C, 1 minute) to form a pressure sensitive adhesive layer (thickness of 30 µm). A PET film ("LUMIRROR 50T60" available from Toray Industries, Inc.) was attached to the surface of the obtained pressure sensitive adhesive layer with the release material, and a pressure sensitive adhesive tape was thus obtained with a release sheet attached thereto.

### [Example 4]

The same operation as in Example 3 was performed except that the thickness of the pressure sensitive adhesive layer was changed to 50 µm and that the pressure sensitive adhesive tape attached with the release sheet was stationarily placed under a reduced pressure condition (23°C, 1,000 Pa) for 24 hours, and a pressure sensitive adhesive tape was thus obtained with the release sheet attached thereto.

### [Example 5]

A reaction apparatus comprising a thermometer, a stirrer, a reflux condenser, and a nitrogen gas inlet was used and fed with 75 mass parts of toluene, 75 mass parts of ethyl acetate, 86.8 mass parts of 2-ethylhexyl acrylate (2EHA), 3 mass parts of acrylic acid (AA), 10 mass parts of vinyl acetate (VAC), and 0.2 mass parts of 2-hydroxyethyl methacrylate (2HEMA). After adding thereto 0.3 mass parts of azobisisobutyronitrile, polymerization reaction was performed in a nitrogen gas atmosphere at 80°C for 8 hours, and 2EHA-AA-VAC-2HEMA copolymer solution was obtained. Mw of the 2EHA-AA-VAC-2HEMA copolymer was 550, 000, and the mass ratio of a constitutional unit based on 2EHA, a constitutional unit based on AA, a constitutional unit based on VAC, and a constitutional unit based on 2HEMA (2EHA:AA:VAC:2HEMA) was 86.8:3:10:0.2. Toluene was added to the obtained 2EHA-AA-VAC-2HEMA copolymer solution to adjust the solid content to 34 mass%, and a solution containing a pressure sensitive adhesive was obtained. To the obtained solution containing a pressure sensitive adhesive, 10 mass parts of terpene-based tackifier ("YS Resin LP" available from YASUHARA CHEMICAL CO., LTD.) was added for 86.8 mass parts of the 2EHA used for preparing the 2EHA-AA-VAC-2HEMA copolymer solution, and an acrylic-based copolymer solution E was obtained. The same operation as in Example 3 was performed except that the obtained acrylic-based copolymer solution E was used as substitute for the acrylic-based copolymer solution C, and a pressure sensitive adhesive tape was thus obtained with a release sheet attached thereto.

### [Example 6]

A container comprising a stirrer, a thermometer, and a dropping funnel was fed with 97.5 mass parts of n-butyl acrylate (BA), 1.0 mass part of 2-hydroxyethyl methacrylate (2-HEMA), 1.5 mass parts of MAA, and 0.3 mass parts of lauryl mercaptan as a chain transfer agent. After adding thereto 2 mass parts of sodium polyoxyethylene alkyl ether sulfate ("LATEMUL E-118B" available from Kao Corporation) and 3 mass parts of sodium allyl alkyl sulfosuccinate ("ELEMINOL JS-2" available from Sanyo Chemical Industries, Ltd.), as anionic nonreactive emulsifying agents, and 56 mass parts of ion-exchanged water, the mixture was stirred under the room temperature, and an emulsified mixture of unsaturated monomers was preliminarily prepared.

In a separate operation, a reaction apparatus comprising a stirrer, a reflux condenser, a thermometer, a nitrogen gas inlet, and a dropping funnel was fed with 28 mass parts of ion-exchanged water; filled with nitrogen; heated to a reaction temperature of 60°C; and fed with 2 mass parts of 5 mass% potassium persulfate aqueous solution as a redox-based polymerization initiator while being maintained at that temperature. A redox-based polymerization initiator solution was thus obtained.

Subsequently, the above preliminarily prepared, emulsified mixture of unsaturated monomers was transferred to the dropping funnel and dropped into the reaction apparatus over 4 hours. During this operation, 2 mass parts of 5 mass% potassium persulfate aqueous solution and 0.8 mass parts of 5 mass% sodium bisulfate aqueous solution were also dropped as redox-based polymerization initiator solution, and emulsion polymerization was performed at a reaction temperature of 80°C.

After completing the dropping and aging at 60°C for 2 hours, an emulsion polymerization composition was obtained. Thereafter, the composition was cooled to the room temperature and neutralized with 25% ammonia water, and purified water was then added thereto to achieve a solid content of 50 mass% and pH of 8.5.

Furthermore, a thickener ("ASE-60" available from ROHM AND HAAS JAPAN K. K.) was added to the above emulsion polymerization composition to adjust the viscosity to 10,000 mPa·s. The viscosity measurement during this operation was performed using a BM-type viscometer under conditions of #4 rotor, 12 rotations per minute, and 25°C. Immediately before application, 1.5 mass parts of epoxy-based crosslinking agent (glycerol polyglycidyl ether, "Denacol EX-313" available from Nagase ChemteX Corporation) were added to 100 mass parts of the above emulsion polymerization composition, and a water dispersion-type and acrylic-based liquid-like pressure sensitive adhesive composition F was obtained.

The above liquid-like pressure sensitive adhesive composition F was applied to the silicone resin release treatment surface of a release sheet ("SP-PET381031" available from LINTEC Corporation) using a knife-over-roll coater, and dried (90°C, 1 minute) to form a pressure sensitive adhesive layer (thickness of 25 µm). The obtained pressure sensitive adhesive layer with a release material and a PET film ("LUMIRROR 50T60" available from Toray Industries, Inc.) were attached to each other, and a pressure sensitive adhesive tape was thus obtained with the release sheet attached thereto.

### [Comparative Example 1]

The same operation as in Example 3 was performed except that the thickness of the pressure sensitive adhesive layer was 50 µm, and a pressure sensitive adhesive tape was thus obtained with a release sheet attached thereto.

### [Comparative Example 2]

A reaction apparatus comprising a thermometer, a stirrer, a reflux condenser, and a nitrogen gas inlet was used and fed with 75 mass parts of toluene, 75 mass parts of ethyl acetate, 90 mass parts of 2-ethylhexyl acrylate (2EHA), and 10 mass parts of acrylic acid (AA). After adding thereto 0.3 mass parts of azobisisobutyronitrile, polymerization reaction was performed in a nitrogen gas atmosphere at 80°C for 8 hours, and 2EHA-AA copolymer solution was obtained. Mw of the 2EHA-AA copolymer was 550, 000, and the mass ratio of a constitutional unit based on 2EHA and a constitutional unit based on AA (2EHA:AA) was 90:10. Toluene was added to the obtained 2EHA-AA copolymer solution to adjust the solid content to 34 mass%, and an acrylic-based copolymer solution G was thus obtained.

A liquid-like pressure sensitive adhesive composition H was produced by compounding 1.0 mass part of toluene diisocyanate (TDI, product name "BHS-8515" available from TOYO INK CO., LTD., solid content of 37.5 mass%) as an isocyanate-based crosslinking agent and 50 mass parts of toluene as a diluent solvent to 100 mass parts of the obtained acrylic copolymer solution G.

The above liquid-like pressure sensitive adhesive composition H was applied to the silicone resin release treatment surface of a release material ("SP-PET381031" available from LINTEC Corporation) using a knife-over-roll coater, and dried (90°C, 1 minute) to form a pressure sensitive adhesive layer (thickness of 30 µm). A PET film ("LUMIRROR 50T60" available from Toray Industries, Inc.) was attached to the surface of the obtained pressure sensitive adhesive layer with the release material, and a pressure sensitive adhesive tape was thus obtained with a release sheet attached thereto.

### [Exemplary Test 1] Test for Color Change of Food

Each of the pressure sensitive adhesive tapes manufactured in the Examples and the Comparative Examples was cut into a size of 25 mm×25 mm. After removing the release sheet, the exposed surface of the pressure sensitive adhesive layer was attached to a banana, which was then stationarily placed under conditions of 23°C and a relative humidity of 50% for 120 hours. After the stationary placing, the pressure sensitive adhesive tape was peeled off from the banana, and observation was performed for the visual appearance of a part of the banana to which the pressure sensitive adhesive tape was attached. The change in the visual appearance was evaluated in accordance with the following evaluation criteria. Results are listed in Table 1.
A: The color was substantially the same as that of a part to which the sample was not attached (Good).
B: The color of the part to which the sample was attached was slightly changed to black, or black spots appeared (Acceptable).
C: The color of the part to which the sample was attached was changed to black (Poor).

### [Exemplary Test 2] Measurement of TVOC Amount

The release sheet was removed from each of the pressure sensitive adhesive tapes manufactured in the Examples and the Comparative Examples, and an evaluation sample was obtained by cutting the pressure sensitive adhesive tape so that the exposed surface of the pressure sensitive adhesive layer would have a surface area of 20 cm². The evaluation sample was enclosed in an ampule, which was then heated at 120 °C for 30 minutes in Purge & Trap GCMass ("JHS-100A" available from Japan Analytical Industry Co., Ltd.) to sample gasses, which were thereafter introduced into GCMass ("TurboMass" available from PerkinElmer), and the amount of sampled TVOC was obtained as an n-decane equivalent amount (unit: µg/cm²) with reference to a calibration curve prepared using n-decane. Results are listed in Table 1.

### [Exemplary Test 3] Measurement of Amount of Migrated Components

Test was conducted in accordance with "the basic rules necessary for testing migration of the constituents of plastic materials and articles intended to come into contact with foodstuffs" (Directive 82/711/EEC, 97/48/EC). The release sheet was removed from each of the pressure sensitive adhesive tapes manufactured in the Examples and the Comparative Examples, and a test sample was obtained by attaching the obtained pressure sensitive adhesive tape to a frame-shaped jig for exposing a predetermined size (surface area of 3 dm²) of the surface of the pressure sensitive adhesive layer. Subsequently, the test sample was stationarily placed at 20°C for 24 hours with the surface of the pressure sensitive adhesive layer of the pressure sensitive adhesive tape being in contact with 150 ml of an extraction solvent (water or 95 vol% ethanol) . Thereafter, only the extraction solvent was dried at 20°C, and drying operation was further performed at 120 °C for 30 minutes. The weight of residue after drying (total amount of migrated components) was measured, which was to represent the amount of nonvolatile components dissolved into the above extraction solvent (unit: µg/cm²). As will be appreciated, 1 µg/cm² corresponds to 0.1 mg/dm². Results are listed in Table 1.

### [Exemplary Test 4] Measurement of Peel Strength

The release sheet was removed from each of the pressure sensitive adhesive tapes manufactured in the Examples and the Comparative Examples, and a pressure sensitive adhesive tape test piece was obtained by cutting the obtained pressure sensitive adhesive tape into a shape of 25 mm×150 mm. The above pressure sensitive adhesive tape test piece was attached to an adherend (SUS304 #600) to provide a test sample under conditions of 23°C and a relative humidity of 50% on the basis of JIS Z0237: 2009 (ISO 29862-29864: 2007). The peel strength (unit: N/25 mm) after 24 hours from the attaching was measured at a tensile speed of 300 mm/min using the 180° peeling test method. Results are listed in Table 1.

**[Table 1]**

| | | | Example 1 | Example 2 | Example 3 | Example 4 | Example 5 | Example 6 | Comparative Example 1 | Comparative Example 2 |
|---|---|---|---|---|---|---|---|---|---|---|
| Test for Color Change of Food | | | A | A | B | A | A | A | C | C |
| Amount of TVOC | | (µg/cm²) | 0.15 | 0.20 | 0.70 | 0.40 | 0.80 | 0.60 | 1.50 | 2.20 |
| Amount of Migrated Components | Water | (µg/cm²) | <5 | <5 | <5 | <5 | <5 | 1200 | 120 | 150 |
| | 95 vol% Ethanol | | 24 | 28 | 72 | 110 | 6000 | 130 | 120 | 150 |
| Peel Strength | | (N/25 mm) | 3.0 | 11.8 | 21.0 | 22.1 | 14.3 | 12.3 | 23.0 | 22.3 |

### [Industrial Applicability]

The pressure sensitive adhesive tape according to the present invention can be suitably used as a pressure sensitive adhesive tape to be used for food labels which are directly attached to foods, such as banana, orange, kiwi, avocado and other fruits.

## Claims

1. A pressure sensitive adhesive tape comprising a base material and a pressure sensitive adhesive layer provided on one surface of the base material,
wherein an emission amount of total volatile organic compounds (TVOC) from the pressure sensitive adhesive tape is 1.0 µg or less as an n-decane equivalent amount per 1 cm² surface of the pressure sensitive adhesive layer.

2. The pressure sensitive adhesive tape as recited in claim 1, wherein a peel strength in 180° peeling from a SUS plate (SUS304 #600) is 0. 1 N/25 mm or more when measured in accordance with JIS Z0237: 2009.

3. The pressure sensitive adhesive tape as recited in claim 1 or 2, wherein the pressure sensitive adhesive layer of the pressure sensitive adhesive tape comprises a pressure sensitive adhesive that contains a triblock copolymer as a main component.

4. The pressure sensitive adhesive tape as recited in claim 3, wherein the triblock copolymer satisfies at least one of a condition that a polystyrene equivalent weight-average molecular weight (Mw) is 30, 000 or more and 300, 000 or less and a condition that a molecular weight distribution (Mw/Mn) is 5.0 or less.

5. The pressure sensitive adhesive tape as recited in any one of claims 1 to 4, satisfying at least one of a condition that an amount of nonvolatile components dissolved from 1 dm² surface of the pressure sensitive adhesive layer of the pressure sensitive adhesive tape into an extraction solvent of water is 60 mg or less and a condition that an amount of nonvolatile components dissolved from 1 dm² surface of the pressure sensitive adhesive layer of the pressure sensitive adhesive tape into an extraction solvent of 95 vol% ethanol is 60 mg or less.
